# EUROPÄISCHE PATENTSCHRIFT

(11) **EP 2 514 011 B1**
(45) Veröffentlichungstag und Bekanntmachung des Hinweises auf die Patenterteilung: **05.10.2016**
(21) Anmeldenummer: 10790563.0
(22) Anmeldetag: 14.12.2010
(51) Int. Cl.: H01M 4/90, H01M 4/92, H01M 4/96, B01J 23/50, B01J 35/00, B01J 21/18, B82Y 30/00

(54) **VERFAHREN ZUR ELEKTROCHEMISCHEN SAUERSTOFFREDUKTION IM ALKALISCHEN**
METHOD FOR ELECTROCHEMICAL OXYGEN REDUCTION IN ALKALINE MEDIUM
PROCÉDÉ DE RÉDUCTION ÉLECTROCHIMIQUE D' OXYGÈNE EN MILIEU BASIQUE

(30) Priorität: 18.12.2009 DE 102009058832
(43) Veröffentlichungstag der Anmeldung: 24.10.2012
(73) Patentinhaber: Covestro Deutschland AG, 51373 Leverkusen (DE)
(72) Erfinder: AßMANN, Jens, 42781 Haan (DE); SCHAEDLICH, Elsa, Karoline, 04103 Leipzig (DE)
(74) Vertreter: Levpat
(86) Internationale Anmeldenummer: PCT/EP2010/069604
(87) Internationale Veröffentlichungsnummer: WO 2011/073179

(56) Entgegenhaltungen:
- WO-A1-2008/138269
- WO-A1-2009/080204
- CN-A- 101 480 612
- DE-A1-102006 017 695
- US-A1- 2004 121 221
- US-A1- 2006 269 827
- US-A1- 2008 102 015
- SERP P ET AL: "Carbon nanotubes and nanofibers in catalysis", APPLIED CATALYSIS A: GENERAL, ELSEVIER SCIENCE, AMSTERDAM, NL, Bd. 253, Nr. 2, 28. Oktober 2003 (2003-10-28), Seiten 337-358, XP004467607, ISSN: 0926-860X, DOI: DOI:10.1016/S0926-860X(03)00549-0
- MAIYALAGAN ET AL: "Nitrogen containing carbon nanotubes as supports for Pt - Alternate anodes for fuel cell applications", ELECTROCHEMISTRY COMMUNICATION, ELSEVIER, AMSTERDAM, NL, Bd. 7, Nr. 9, 1. September 2005 (2005-09-01), Seiten 905-912, XP005032189, ISSN: 1388-2481
- DATABASE INSPEC [Online] THE INSTITUTION OF ELECTRICAL ENGINEERS, STEVENAGE, GB März 2006 ZAMUDIO A ET AL: 'Efficient anchoring of silver nanoparticles on N-doped carbon nanotubes' Database accession no. 9384370 & SMALL WILEY-VCH GERMANY Bd. 2, Nr. 3, Seiten 346 - 350 DOI: 10.1002/50111.200500348 ISSN: 1613-6810
- MALDONADO S ET AL: "Influence of Nitrogen Doping on Oxygen Reduction Electrocatalysis at Carbon Nanofiber Electrodes", JOURNAL OF PHYSICAL CHEMISTRY PART B: CONDENSED MATTER, MATERIALS, SURFACES, INTERFACES & BIOPHYSICAL, AMERICAN CHEMICAL SOCIETY, US, vol. 109, no. 10, 17 March 2005 (2005-03-17), pages 4707-4716, XP002573539, ISSN: 1520-6106, DOI: 10.1021/JP044442Z [retrieved on 2005-02-19]

## Beschreibung

Die Erfindung betrifft ein Verfahren zur elektrochemischen Reduktion von Sauerstoff in alkalischen Medien, wobei hierbei ein Katalysator umfassend Stickstoff-dotierte Kohlenstoffnanoröhrchen **(NCNT)** mit auf deren Oberfläche befindlichen Metall-Nanopartikeln eingesetzt wird.

Kohlenstoffnanoröhrchen sind mindestens seit ihrer Beschreibung 1991 von Iijima (S. Iijima, Nature 354, 56-58, 1991) dem Fachmann allgemein bekannt. Unter Kohlenstoffnanoröhrchen werden seither zylinderförmige Körper umfassend Kohlenstoff mit einem Durchmesser zwischen 3 und 80 nm und einer Länge, die ein Vielfaches, mindestens 10-faches, des Durchmessers beträgt, zusammengefasst. Weiterhin kennzeichnend für diese Kohlenstoffnanoröhrchen sind Lagen geordneter Kohlenstoffatome, wobei im Regelfall die Kohlenstoffnanoröhrchen einen in der Morphologie unterschiedlichen Kern aufweisen. Synonyme für Kohlenstoffnanoröhrchen sind beispielsweise "carbon fibrils" oder "hollow carbon fibres" oder "carbon bamboos" oder (im Fall von aufgewickelten Strukturen) "Nanoscrolls" oder "Nanorolls".

Diese Kohlenstoffnanoröhrchen haben aufgrund ihrer Dimensionen und ihrer besonderen Eigenschaften eine technische Bedeutung für die Herstellung von Kompositmaterialen. Wesentliche weitere Möglichkeiten liegen in Elektronik- und Energieanwendungen, da sie sich im Allgemeinen durch eine höhere spezifische Leitfähigkeit als graphitischer Kohlenstoff, z.B. in Form von Leitruß auszeichnen. Besonders vorteilhaft ist die Verwendung von Kohlenstoffanoröhrchen, wenn diese hinsichtlich der oben genannten Eigenschaften (Durchmesser, Länge etc.) möglichst einheitlich sind.

Ebenfalls bekannt ist die Möglichkeit, diese Kohlenstoffnanoröhrchen durch Heteroatome z.B. der fünften Hauptgruppe (wie etwa Stickstoff) während des Verfahrens zur Herstellung der Kohlenstoffnanoröhrchen zu dotieren.

Die allgemein bekannten Methoden zur Herstellung von Stickstoff-dotierten Kohlenstoffnanoröhrchen lehnen sich an die herkömmlichen Herstellmethoden für die klassischen Kohlenstoffnanoröhrchen wie beispielsweise Lichtbogen-, Laserablations- und katalytische Verfahren an.

Lichtbogen- und Laserablationsverfahren sind unter anderem dadurch gekennzeichnet, dass im Rahmen dieser Herstellverfahren Ruß, amorpher Kohlenstoff und Fasern mit hohen Durchmessern als Nebenprodukte gebildet werden, womit die resultierenden Kohlenstoffnanoröhrchen zumeist aufwändigen Nachbehandlungsschritten unterworfen werden müssen, was die aus diesen Verfahren erhaltenen Produkte und somit diese Verfahren wirtschaftlich unattraktiv macht.

Katalytische Verfahren bieten hingegen Vorteile für eine wirtschaftliche Produktion von Kohlenstoffnanoröhrchen da durch diese Verfahren gegebenenfalls ein Produkt mit hoher Qualität in guter Ausbeute herstellbar ist.

Ein solches katalytisches Verfahren, insbesondere ein Wirbelschichtverfahren, wird in der DE 10 2006 017 695 A1 beschrieben. Das dort beschriebene Verfahren umfasst insbesondere eine vorteilhafte Betriebsweise der Wirbelschicht, mittels derer kontinuierlich unter Zuführung neuen Katalysators und Abführung von Produkt Kohlenstoffnanoröhrchen hergestellt werden können. Es wird ebenfalls beschrieben, dass die verwendeten Edukte Heteroatome umfassen können. Eine Verwendung von Edukten, die eine Stickstoff-Dotierung der Kohlenstoffnanoröhrchen zur Folge hätten, wird nicht offenbart.

Ein ähnliches Verfahren zur gezielten, vorteilhaften Herstellung von Stickstoff-dotierten Kohlenstoffnanoröhrchen **(NCNT)** wird in der WO 2009/080204 beschrieben. In der WO 2009/08204 wird beschrieben, dass die mittels des Verfahrens erzeugten Stickstoff-dotierten Kohlenstoffnanoröhrchen **(NCNT)** noch Reste des Katalysatormaterials zu deren Herstellung enthalten können. Diese Reste des Katalysatomaterials können Metall-Nanopartikel sein. Ein Verfahren zur nachträglichen Beladung der Stickstoff-dotierten Kohlenstoffnanoröhrchen **(NCNT)** wird nicht offenbart. Gemäß dem Verfahren nach der WO 2009/080204 ist es weiter bevorzugt die Reste des Katalysatomaterials zu entfernen.

Es ist aber gemäß der WO 2009/080204 stets so, dass nur geringe Anteile des Katalysatormaterials in den erhaltenen Stickstoff-dotierten Kohlenstoffnanoröhrchen **(NCNT)** enthalten sind. Die Liste der möglichen Katalysatormaterialien, die in geringen Anteilen in den hergestellten Stickstoff-dotierten Kohlenstoffnanoröhrchen **(NCNT)** enthalten sein kann besteht aus Fe, Ni, Cu, W, V, Cr, Sn, Co, Mn und Mo, sowie gegebenenfalls Mg, Al, Si, Zr, Ti, sowie weitere dem Fachmann bekannte Mischmetalloxid bildende Elemente und deren Salze und Oxide. Eine Oberflächenbeladung der Stickstoff-dotierten Kohlenstoffnanoröhrchen **(NCNT)** mit den vorgenannten Katalysatormaterialien wird aber nicht offenbart, da die Stickstoff-dotierten Kohlenstoffnanoröhrchen **(NCNT)** auf den Katalysatormaterialien gebildet werden.

Die WO 2009/080204 beschreibt des Weiteren nicht, in welchen Formen der Stickstoff in den Stickstoff-dotierten Kohlenstoffnanoröhrchen **(NCNT)** enthalten sein kann.

Dass Kohlenstoffnanoröhrchen ohne Heteroatome mit Silber an ihrer Oberfläche nachträglich beladen werden können beschreiben Yan et al. in "Production of a high dispersion of silver nanoparticles on surface-functionalized multi-walled carbon nanotubes using an electrostatic technique", erschienen in Materials Letters 63 (2009) 171-173. Demnach können Kohlenstoffnanoröhrchen mit Silber nachträglich beladen werden, indem diese zunächst mit oxidierenden Säuren, wie Salpetersäure und Schwefelsäure an ihrer Oberfläche funktionalisiert werden. Gemäß der Beschreibung von Yan et al. bilden sich im Zuge des Behandelns der Kohlenstoffnanoröhrchen mit den oxidierenden Säuren an deren Oberflächen funktionelle Gruppen, die als "Ankerplätze" für die auf diesen abzuscheidenden Silbernanopartikeln dienen.

Da gemäß Yan et al. die oxidierende Eigenschaft der Säuren maßgeblich ist, ist gemäß der Beschreibung von Yan et al. davon auszugehen ist, dass die Heteroatome Sauerstoff sind und somit keine Stickstoff-dotierten Kohlenstoffnanoröhrchen **(NCNT)** als Ausgangspunkt für die mit Silber beladenen Kohlenstoffnanoröhrchen offenbart werden. Darüber hinaus offenbaren Yan et al. nicht, dass diese beladenen Kohlenstoffnanoröhrchen als Katalysatoren in der elektrochemischen Reduktion von Sauerstoff im Alkalischen verwendbar wären.

In der WO 2008/138269 werden Stickstoff enthaltende Kohlenstoffnanoröhrchen mit Platin- oder Rutheniummetallnanopartikeln beschrieben, die einen Stickstoffanteil von 0,01 bis 1,34, ausgedrückt im Verhältnis von Stickstoff zu Kohlenstoff (CNₓ mit x = 0,01-1,34) aufweisen. Gemäß der WO 2008/138269 haben die Platin- oder Rutheniummetallnanopartikel einen Durchmesser von 0,1 bis 15 nm und sind in einem Anteil von 1 bis 100 % der Gesamtmasse der Stickstoff enthaltenden Kohlenstoffnanoröhrchen vorhanden.

In der WO 2008/138269 wird nicht offenbart, dass andere Metall-Nanopartikel als jene des Platins oder des Rutheniums vorhanden sein können. Des Weiteren offenbart auch die WO 2008/138269 nicht die Natur des Stickstoffs in den Stickstoff enthaltenden Kohlenstoffnanoröhrchen und auch nicht, dass die erhaltenen Stickstoff enthaltenden Kohlenstoffnanoröhrchen mit Platin- oder Rutheniummetallnanopartikeln in Verfahren zur elektrochemischen Reduktion von Sauerstoff im Alkalischen einsetzbar sind.

In der deutschen Schutzrechtsanmeldung mit dem amtlichen Aktenzeichen DE 10 2008 063 727 wird ein Verfahren zur Reduktion molekularen Sauerstoffs in alkalischen Medien beschrieben, das die elektrochemische Reduktion molekularen Sauerstoffs zu doppelt negativ geladenen Sauerstoff-Ionen in Lösungen eines pH-Wertes größer oder gleich 8 erlaubt, wobei der molekulare Sauerstoff in solchen Lösungen mit Stickstoff-dotierten Kohlenstoffnanoröhrchen **(NCNT)** mit einem Anteil an pyridinischem und quaternärem Stickstoff in Kontakt gebracht wird.

Aus der DE 10 2008 063 727, sowie aus den in jener Anmeldung beschriebenen weiteren Dokumenten des Standes der Technik wird ersichtlich, dass die Verwendung von Stickstoff-dotierten Kohlenstoffnanoröhrchen **(NCNT)** im Zusammenhang mit der Reduktion von Sauerstoff gegebenenfalls eine technisch vorteilhafte Reduktion von Sauerstoff erlauben. Allerdings scheinen die hierbei auftretenden technischen Probleme noch nicht zur Gänze verstanden und/oder gelöst zu sein.

Die DE 10 2008 063 727 offenbart aber kein Verfahren zur Reduktion von Sauerstoff in alkalischen Medien in Anwesenheit von Stickstoff-dotierten Kohlenstoffnanoröhrchen **(NCNT),** bei dem diese Stickstoff-dotierten Kohlenstoffnanoröhrchen **(NCNT)** an ihrer Oberfläche mit Metall-Nanopartikeln beladen sein könnten.

Nach dem Stand der Technik ist es also ein ungelöstes Problem, ein besonders effektives Verfahren zur elektrochemischen Reduktion von Sauerstoff zur Verfügung zu stellen, das die Vorteile der Stickstoff-dotierten Kohlenstoffnanoröhrchen **(NCNT)** voll ausschöpft.

Es wurde nun als erster Gegenstand der vorliegenden Erfindung überraschend gefunden, dass diese Aufgabe durch ein Verfahren zur elektrochemischen Reduktion von Sauerstoff in alkalischen Medien eines pH-Wertes von mehr als 10, **dadurch gekennzeichnet,** dass es in Gegenwart eines Katalysators umfassend Stickstoff-dotierte Kohlenstoffnanoröhrchen **(NCNT)** mit auf deren Oberfläche im Anteil von 2 bis 60 Gew.-% befindlichen Metall-Nanopartikeln einer mittleren Partikelgröße im Bereich von 1 bis 15 nm ausgeführt wird, gelöst werden kann.

Die als Bestandteil des Katalysators im erfindungsgemäßen Verfahren verwendeten Stickstoffdotierten Kohlenstoffnanoröhrchen **(NCNT)** haben üblicherweise einen Anteil an Stickstoff von mindestens 0,5 Gew.-%. Bevorzugt weisen die verwendeten einen Stickstoff-dotierten Kohlenstoffnanoröhrchen **(NCNT)** einen Stickstoffanteil im Bereich von 0,5 Gew.-% bis 18 Gew.-%, besonders bevorzugt im Bereich von 1 Gew.-% bis 16 Gew.-% auf.

Der Stickstoff in den als Bestandteil des Katalysators in dem erfindungsgemäßen Verfahren eingesetzten Stickstoff-dotierten Kohlenstoffnanoröhrchen **(NCNT)** ist in den graphitischen Schichten der Stickstoff-dotierten Kohlenstoffnanoröhrchen **(NCNT)** eingebaut und ist darin bevorzugt mindestens teilweise als pyridinischer Stickstoff vorhanden.

Der in den Stickstoff-dotierten Kohlenstoffnanoröhrchen **(NCNT)** vorhandene Stickstoff kann aber daneben auch als Nitro-Stickstoff und/oder als Nitroso-Stickstoff und/oder pyrrolischer Stickstoff und/oder Amin-Stickstoff und/oder als quatemärer Stickstoff vorliegen.

Die Anteile an quatemärem Stickstoff und/oder Nitro- und/oder Nitroso- und/oder aminem und/oder pyrrolischem Stickstoff sind für die vorliegende Erfindung insofern von nachrangiger Bedeutung, als dass ihr Vorhandensein die Erfindung nicht signifikant behindert.

Erfindungsgemäß ist die Ausführung des Verfahrens aber unter Verwendung von Katalysatoren umfassend Sitckstoff-dotierte Kohlenstoffnanoröhrchen **(NCNT),** in denen der vorhandene Stickstoff mindestens zu 40 mol-% pyridinischer Stickstoff ist.

Der Anteil an pyridinischem Stickstoff an den Stickstoff-dotierten Kohlenstoffnanoröhrchen **(NCNT)** des Katalysators beträgt ganz besonders bevorzugt mindestens 50 mol-%.

Im Zusammenhang mit der vorliegenden Erfindung beschreibt "pyridinischer Stickstoff" Stickstoffatome, die in einer heterozyklischen Verbindung bestehend aus fünf Kohlenstoffatomen und dem Stickstoffatom in den Stickstoff-dotierten Kohlenstoffnanoröhrchen **(NCNT)** vorliegen. Ein Beispiel für einen solchen pyridinischen Stickstoff zeigt die nachstehende Abbildung (I).

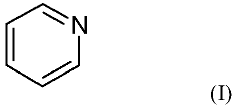

Pyridinischer Stickstoff bezeichnet aber nicht nur die in der Abbildung (I) dargestellte aromatische Form der vorgenannten heterozyklischen Verbindung, sondern auch die einfach oder mehrfach gesättigten Verbindungen gleicher Summenformel.

Darüber hinaus sind auch andere Verbindungen von der Bezeichnung "pyridinischer Stickstoff" mit umfasst, wenn solche anderen Verbindungen eine heterozyklischen Verbindung bestehend aus fünf Kohlenstoffatomen und dem Stickstoffatom umfassen. Ein Beispiel für solchen pyridinischen Stickstoff zeigt die Abbildung (II).

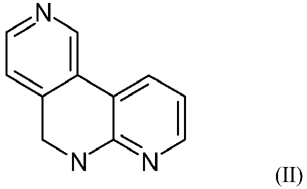

In der Abbildung (II) sind beispielsweise drei pyridinische Stickstoffatome dargestellt, die Bestandteil einer multizyklischen Verbindung sind. Eines der pyridinischen Stickstoffatome ist Bestandteil einer nicht aromatischen heterozyklischen Verbindung.

Im Unterschied hierzu bezeichnet im Rahmen der vorliegenden Erfindung "quaternärer Stickstoff" Stickstoffatome, die kovalent an mindestens drei Kohlenstoffatome gebunden sind. Beispielsweise kann solcher quaternärer Stickstoff Bestandteil von multizyklischen Verbindungen, wie in der Abbildung (III) dargestellt, sein.

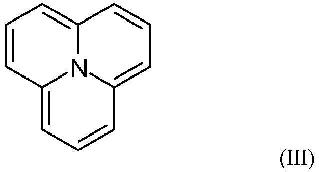

Pyrrolischer Stickstoff beschreibt im Zusammenhang mit der vorliegenden Erfindung Stickstoffatome, die in einer heterozyklischen Verbindung bestehend aus vier Kohlenstoffatomen und dem Stickstoffatom in den Stickstoff-dotierten Kohlenstofrnanoröhrchen **(NCNT)** vorliegen. Ein Beispiel für eine pyrrolische Verbindung im Zusammenhang mit der vorliegenden Erfindung zeigt die Abbildung (IV):

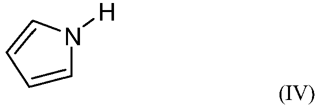

Auch im Zusammenhang mit dem "pyrrolischen Stickstoff" gilt, dass dieser nicht beschränkt auf die heterozyklisch ungesättigte Verbindung gemäß der Abbildung (IV) zu verstehen ist, sondern dass auch gesättigte Verbindungen mit vier Kohlenstoffatomen und einem Stickstoffatom in zyklischer Anordnung hierdurch im Zusammenhang mit der vorliegenden Erfindung mit umfasst sind.

Nitro- bzw. Nitroso-Stickstoff bezeichnet im Zusammenhang mit der vorliegenden Erfindung Stickstoffatome in den Stickstoff-dotierten Kohlenstoffnanoröhrchen **(NCNT),** welche ungeachtet ihrer weiteren kovalenten Bindungen an mindestens ein Sauerstoffatom gebunden vorliegen. Eine spezielle Erscheinungsform eines solchen Nitro- bzw. Nitroso-Stickstoffs zeigt die Abbildung (V), die hier insbesondere die Abgrenzung zum vorgenannten pyridinischen Stickstoff erläutern soll.

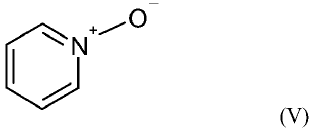

Aus der Abbildung (V) wird ersichtlich, dass im Gegensatz zu den Verbindungen, die einen "pyridinischen Stickstoff" im Sinne der vorliegenden Erfindung umfassen, hier der Stickstoff auch an mindestens ein Sauerstoffatom kovalent gebunden vorliegt. Damit besteht die heterozyklische Verbindung nicht mehr nur aus fünf Kohlenstoffatomen und dem Stickstoffatom, sondern besteht aus fünf Kohlenstoffatomen, dem Stickstoffatom und einem Sauerstoffatom.

Neben der in der Abbildung (V) dargestellten Verbindung sind durch den Begriff Nitro- bzw. Nitroso-Stickstoff im Zusammenhang mit der vorliegenden Erfindung auch die Verbindungen erfasst, die nur aus Stickstoff und Sauerstoff bestehen. Die in der Abbildung (V) dargestellte Erscheinungsform von Nitro- bzw. Nitroso-Stickstoff wird auch als oxidierter pyridinscher Stickstoff bezeichnet.

Aminer Stickstoff bezeichnet im Zusammenhang mit der vorliegenden Erfindung Stickstoffatome, die in den Stickstoff-dotierten Kohlenstoffnanoröhrchen **(NCNT)** an mindestens zwei Wasserstoffatome und an maximal ein Kohlenstoffatom gebunden vorliegen, die aber nicht an Sauerstoff gebunden vorliegen.

Das Vorliegen von pyridinischem Stickstoff in den angegebenen Anteilen ist besonders vorteilhaft, weil überraschend gefunden wurde, dass insbesondere der pyridinische Stickstoff der Stickstoffdotierten Kohlenstoffnanoröhrchen **(NCNT)** des eingesetzten Katalysators zusammen mit den auf der Oberfläche der Stickstoff-dotierten Kohlenstoffnanoröhrchen **(NCNT)** befindlichen Metall-Nanopartikel in synergistischer Weise die elektrochemische Reduktion von Sauerstoff im Alkalischen katalytisch fördert.

Ohne an eine Theorie gebunden zu sein, scheint es, als würde in dem Verfahren eine molekulare Wechselwirkung zwischen den pyridinischen Stickstoffgruppen der Stickstoff-dotierten Kohlenstoffnanoröhrchen **(NCNT)** und den Metall-Nanopartikeln an der Oberfläche derselben die Reduktion von Sauerstoff stärker katalysieren, als dies zu erwarten wäre.

Insbesondere jene molekulare Wechselwirkung bedingt wohl die vorteilhafte Verwendung der Stickstoff-dotierten Kohlenstoffnanoröhrchen **(NCNT)** mit Metall-Nanopartikeln gegenüber den reinen Metall-Nanopartikeln oder reinen Stickstoff-dotierten Kohlenstoffnanoröhrchen **(NCNT)** als verbesserte Katalysatoren.

Die Metall-Nanopartikel können aus einem Metall ausgewählt aus der Liste bestehend aus Fe, Ni, Cu, W, V, Cr, Sn, Co, Mn, Mo, Mg, Al, Si, Zr, Ti, Ru, Pt, Ag, Au, Pd, Rh, Ir, Ta, Nb, Zn und Cd bestehen.

Bevorzugt bestehen die Metall-Nanopartikel aus einem Metall ausgewählt aus der Liste bestehend aus Ru, Pt, Ag, Au, Pd, Rh, Ir, Ta, Nb, Zn und Cd.

Besonders bevorzugt bestehen die Metall-Nanopartikel aus einem Metall ausgewählt aus der Liste bestehend aus Ag, Au, Pd, Pt, Rh, Ir, Ta, Nb, Zn und Cd.

Erfindungsemäß bestehen die Metall-Nanopartikel aus Silber (Ag).

Die mittlere Partikelgröße der Metall-Nanopartikel liegt bevorzugt im Bereich von 2 bis 5 nm.

Der Anteil der Metall-Nanopartikel an dem Katalysator umfassend Stickstoff-dotierte Kohlenstoffnanoröhrchen **(NCNT)** mit Metall-Nanopartikeln beträgt bevorzugt von 20 bis 50 Gew.-%.

Der in dem erfindungsgemäßen Verfahren eingesetzte Katalysator umfassend Stickstoff-dotierte Kohlenstoffnanoröhrchen **(NCNT)** mit auf deren Oberfläche im Anteil von 2 bis 60 Gew.-% befindlichen Metall-Nanopartikeln einer mittleren Partikelgröße im Bereich von 1 bis 15 nm wird üblicherweise durch ein Verfahren erhalten, das **dadurch gekennzeichnet** ist, dass es mindestens die Schritte:
a) Bereitstellen von Stickstoff-dotierten Kohlenstoffnanoröhrchen **(NCNT)** mit einem Anteil von mindestens 0,5 Gew.-% Stickstoff als Suspension **(A)** in einem ersten Lösungsmittel,
b) Bereitstellen einer Suspension **(B)** von Metall-Nanopartikeln in einem zweiten Lösungsmittel,
c) Vermengen der Suspensionen **(A)** und **(B)** erhaltend eine Suspension **(C),** und
d) Abtrennen der Stickstoff-dotierten Kohlenstoffnanoröhrchen **(NCNT),** nun beladen mit Metall-Nanopartikeln, aus der Suspension **(C),**
umfasst.

Die gemäß dem Schritt a) des erfindungsgemäßen Verfahrens verwendeten Stickstoff-dotierten Kohlenstoffnanoröhrchen **(NCNT)** sind üblicherweise jene, wie Sie aus den Verfahren gemäß der WO 2009/080204 erhalten werden können.

In der erfindungsgemäßen Ausführungsform des Verfahrens sind es Stickstoff-dotierte Kohlenstoffnanoröhrchen **(NCNT),** die einen Anteil an pyridinischem Stickstoff von mindestens 40 mol-%, bevorzugt mindestens 50 mol-% am in den Stickstoff-dotierten Kohlenstoffnanoröhrchen **(NCNT)** enthaltenen Stickstoff aufweisen.

Die Suspension **(B)** gemäß dem Schritt b) des Verfahrens wird üblicherweise erhalten, indem in einem Schritt b1) ein Metallsalz enthaltendes Lösungsmittel **(A)** bereitgestellt wird und nachfolgend in einem Schritt b2) das Metallsalz im Lösungsmittel **(A)** zu Metall-Nanopartikeln unter Erhalt einer Suspension **(B)** reduziert wird.

Diese Reduktion des Metallsalzes im Lösungsmittel **(A)** kann in Anwesenheit von Kolloidstabilisatoren geschehen, die eine Agglomeration der sich bildenden Metall-Nanopartikel verhindern oder nicht. Bevorzugt wird die Reduktion in Anwesenheit solcher Kolloidstabilisatoren ausgeführt.

Geeignete Kolloidstabilisatoren sind üblicherweise jene ausgewählt aus der Liste bestehend aus Aminen, Carbonsäuren, Thiolen, Dicarbonsäuren den Salzen der vorgenannten und Sulfoxiden. Bevorzugt sind jene ausgewählt aus der Liste bestehend aus Butylamin, Decansäure, Dodecylamin, Myristinsäure, Dimethylsulfoxid (DMSO), ortho-Toluolthiol und Natriumcitrat.

Das Metallsalz im Lösungsmittel (A), gemäß dem Schritt b1) ist üblicherweise eine Lösung eines Salzes eines der Metalle ausgewählt aus der Liste bestehend aus Fe, Ni, Cu, W, V, Cr, Sn, Co, Mn, Mo, Mg, A1, Si, Zr, Ti, Ru, Pt, Ag, Au, Pd, Rh, Ir, Ta, Nb, Zn und Cd.

Bevorzugt sind die Metalle ausgewählt aus der Liste bestehend aus Ru, Pt, Ag, Au, Pd, Rh, Ir, Ta, Nb, Zn und Cd. Besonders bevorzugt sind die Metalle ausgewählt aus der Liste bestehend aus Ag, Au, Pd, Pt, Rh, Ir, Ta, Nb, Zn und Cd. Erfindungsgemäß bevorzugt ist das Metall Silber (Ag).

Die Metallsalze sind üblicherweise Salze der vorgenannten Metalle mit einer Verbindung ausgewählt aus der Liste bestehend aus Nitrat, Acetat, Chlorid, Bromid, Iodid, Sulfat. Bevorzugt ist Chlorid oder Nitrat.

Die Metallsalze liegen im Lösungsmittel (A) üblicherweise in einer Konzentration von 1 bis 1000 mmol/l vor.

Die Lösungsmittel (A) sind üblicherweise ausgewählt aus der Liste bestehend aus Wasser, Alkohole, Toluol, Cyclohexan, Pentan, Hexan, Heptan, Octan, Benzol, Xylole und deren Mischungen.

Alkohole aus der vorstehenden Liste können einwertige oder mehrwertige Alkohole sein. Mögliche Beispiele für mehrwertige Alkohole sind etwa Ethylenglykol, Glycerin, Sorbit und Inosit. Mehrwertige Alkohole können auch polymere Alkohole, wie beispielsweise Polyethylenglykol sein.

Die Reduktion gemäß dem Schritt b2) des Verfahrens wird üblicherweise unter Verwendung eines chemischen Reduktionsmittels **(R)** ausgewählt aus der Liste bestehend aus Natriumborhydrid, Hydrazin, Natriumcitrat, Ethylenglykol, Methanol, Ethanol sowie weitere Borhydride ausgeführt.

In einem in einer bevorzugten Weiterentwicklung des Verfahrens zur Herstellung des Katalysators ausgeführten Schritt b3) wird die Flüssigkeit (im Wesentlichen das Lösungsmittel aus den Schritten b1) und b2)) von den gebildeten Metall-Nanopartikeln abgetrennt und nachfolgend die Metall-Nanopartikel in dem in dem Schritt b) des Verfahrens benannten zweiten Lösungsmittel aufgenommen.

Wird die gerade beschriebene bevorzugte Weiterentwicklung des Verfahrens zur Herstellung des Katalysators nicht ausgeführt, so bildet die vorgenannte Flüssigkeit bereits das zweite Lösungsmittel. Das erste und das zweite Lösungsmittel gemäß den Schritten a) und b) des Verfahrens zur Herstellung des Katalysators kann unabhängig voneinander ausgewählt sein aus der Liste bestehend aus Wasser, Alkohole, Toluol, Cyclohexan, Pentan, Hexan, Heptan, Octan, Benzol, Xylole und deren Mischungen.

Alkohole aus der vorstehenden Liste können einwertige oder mehrwertige Alkohole sein. Mögliche Beispiele für mehrwertige Alkohole sind etwa Ethylenglykol, Glycerin, Sorbit und Inosit. Mehrwertige Alkohole können auch polymere Alkohole, wie beispielsweise Polyethylenglykol sein. Bevorzugt sind das erste und das zweite Lösungsmittel mindestens teilweise identisch.

Das Abtrennen gemäß dem Schritt d) des Verfahrens erfolgt üblicherweise mit Methoden, wie sie dem Fachmann allgemein bekannt sind. Nicht abschließendes Beispiel für ein solches Abtrennen ist etwa die Filtration.

Gegenstand der vorliegenden Erfindung ist die Verwendung von mit an ihrer Oberfläche mit Metall-Nanopartikeln beladenen Stickstoff-dotierten Kohlenstoffnanoröhrchen **(NCNT)** zur elektrochemischen Reduktion von Sauerstoff in alkalischen Medien eines pH-Wertes von mehr als 10.

Die Vorteilhaftigkeit dieser Verwendung ist bereits vorstehend im Zusammenhang mit dem erfindungsgemäßen Verfahren dargelegt. Die dort offenbarten bevorzugten Varianten des Verfahrens sind ebenso im Rahmen der erfindungsgemäßen Verwendung einsetzbar.

Im Folgenden werden das erfindungsgemäße Verfahren und die hierfür hergestellten Katalysatoren umfassend Stickstoff-dotierte Kohlenstoffnanoröhrchen **(NCNT)** mit Metall-Nanopartikeln anhand einiger Beispiele illustriert, wobei die Beispiele jedoch nicht als Einschränkung des Erfindungsgedankens zu verstehen sind.

Darüber hinaus wird die Erfindung anhand von Abbildungen näher illustriert, ohne sie jedoch dadurch hierauf zu beschränken.
Fig. 1 zeigt das Ergebnis der TEM Untersuchung des Katalysators gemäß Beispiel 1 aus dem Beispiel 6
Fig. 2 zeigt das Ergebnis der TEM Untersuchung des Katalysators gemäß Beispiel 2 aus dem Beispiel 6
Fig. 3 zeigt das Ergebnis der TEM Untersuchung des Katalysators gemäß Beispiel 3 aus dem Beispiel 6
Fig. 4 zeigt das Ergebnis der Messungen der Verfahren unter Verwendung der Katalysatoren aus den Beispielen 1 bis 3 gemäß der Beispiele 7 und 8. Dargestellt ist der Verlauf des Reduktionsstroms (I) über der angelegten Spannung (U) gegenüber einer Ag/AgCl-Referenzelektrode, sowie die auf der x-Achse bei einem Reduktionsstom von jeweils -10⁻⁴ A.
Fig. 5 zeigt eine Gegenüberstellung der Überspannungen (U) zur Reduktion eines Mols Sauerstoff für die erfindungsgemäßen Verfahren (1-2) unter der Verwendung der Katalysatoren gemäß der Beispiele 1 und 2 gegenüber den nicht erfindungsgemäßen Verfahren (3-4) unter Verwendung der Katalysatoren gemäß der Beispiele 3 und 4.

### Beispiele:

### Beispiel 1: Herstellen eines im erfindungsgemäßen Verfahren verwendbaren Katalysators

Stickstoff-dotierte Kohlenstoffnanoröhrchen wurden gemäß dem Beispiel 5 der WO 2009/080204 mit den einzigen Unterschieden, dass abweichend hiervon Pyridin als Edukt verwendet wurde, die Reaktion bei einer Reaktionstemperatur von 700°C ausgeführt wurde und die Reaktionszeit auf 30 Minuten begrenzt wurde, hergestellt.

Restanteile des verwendeten Katalysators (es wurde ein Katalysator gemäß dem Beispiel 1 der WO2009/080204 hergestellt und verwendet) wurden durch Waschen der erhaltenen Stickstoffdotierten Kohlenstoffnanoröhrchen in 2 molarer Salzsäure für 3 Stunden unter Rückfluss entfernt.

Die erhaltenen Stickstoff-dotierten Kohlenstoffnanoröhrchen wurden teilweise der Untersuchung gemäß dem Beispiel 5 zugeführt. Eine Menge von 800 mg der Stickstoff-dotierten Kohlenstoffnanoröhrchen wurden in 100 ml Cyclohexan gegeben und für 15 min mit Ultraschall behandelt (Ultraschallbad, 35 kHz).

Eine Suspension von Silber-Nanopartikeln wurde erhalten, indem zunächst 22,7 g (131,4 mmol) Decansäure (>99 %, Acros Organics) und 30 g (131,4 mmol) Myristinsäure (>98 %, Fluka) in 500 ml Toluol (>99,9 %, Merck) gelöst wurden. Hierzu wurden 22,3 g (131,4 mmol) Silbernitrat (>99 %, Roth) gelöst in 25 ml deionisiertem Wasser gegeben. Nach Zugabe wurde 5 min gerührt.

Anschließend wurden 19,2 g (263 mmol) n-Butylamin (>99,5 %, Sigma-Aldrich) innerhalb von drei Minuten unter Rühren hinzugetropft. Hiernach wiederum wurden 1,24 g (32,9 mmol) Natriumborhydrid (>98 %, Acros Organics), das zuvor in 40 ml eisgekühltem deionisiertem Wasser gelöst wurde, innerhalb von 15 min unter Rühren zur Reaktionsmischung hinzugegeben.

Nach vier Stunden fortgesetztem Rühren unter Raumtemperatur wurde ein 7-facher Überschuss von Aceton (>99,9 %, Kraemer& Martin GmbH) bezogen auf das eingesetzte Toluolvolumen hinzugegeben, wodurch ein Feststoff aus der Lösung ausfiel, der anschließend filtriert wurde.

Der erhaltene feuchte, filtrierte Feststoff wurde mit Aceton gewaschen und zwei Stunden im Vakuumtrockenschrank (Druck ∼ 10 mbar) bei etwa 50°C getrocknet.

Von dem trockenen Feststoff wurden etwa 200 mg in 30 ml Cyclohexan dispergiert und diese Dispersion dann mit den 100 ml der zuvor beschriebenen Dispersion der Stickstoff-dotierten Kohlenstoffnanoröhrchen vereinigt.

Das entstandene Gemisch wurde so lange gerührt, bis das Dispersionsmittel komplett entfärbt war (< 2 h).

Abschließend wurde filtriert (Blauband Rundfilter, Schleicher&Schüll) und der als Filterkuchen erhaltene Katalysator mit Aceton gewaschen und zwei Stunden im Vakuumtrockenschrank (Druck ∼ 10 mbar) wiederum bei 50°C getrocknet.

Die anschließend erfolgte quantitative Elementanalyse (Induktiv gekoppelte Plasma optische Emissionsspektroskopie "ICP-OES", Gerät: Spectroflame D5140, Fa. Spectro, Methode nach Vorschrift des Geräteherstellers) auf Silber ergab eine Beladung von 19,0 gew.%.

Der erhaltene Katalysator wurde nachfolgend sowohl teilweise der Untersuchung gemäß dem Beispiel 6 als auch teilweise dem Beispiel 7 zugeführt.

### Beispiel 2: Herstellen eines im erfindungsgemäßen Verfahren verwendbaren Katalysators

Stickstoff-dotierte Kohlenstoffnanoröhrchen wurden analog zu Beispiel 1 hergestellt, dies mit dem einzigen Unterschied, dass die Reaktion nun für 60 min. ausgeführt wurde.

Die Stickstoff-dotierten Kohlenstoffnanoröhrchen wurden ebenfalls vor dem Mischen mit einer Silber-Nanopartikeldispersion teilweise der Untersuchung gemäß dem Beispiel 5 zugeführt.

Hiernach folgte wieder eine Behandlung gleich zu jener gemäß dem Beispiel 1 zur Aufbringung von Silber-Nanopartikeln. Die quantitative Elementanalyse (ICP-OES) auf Silber ergab eine Beladung von 20,6 gew.%.

Der erhaltene Katalysator wurde nachfolgend sowohl teilweise der Untersuchung gemäß dem Beispiel 6 als auch teilweise dem Beispiel 7 zugeführt.

### Beispiel 3: Herstellen eines nicht im erfindungsgemäßen Verfahren verwendbaren Katalysators

Ein Versuch gleich zu jenem in Beispiel 1 wurde durchgeführt, mit dem einzigen Unterschied, dass anstelle der dort verwendeten Stickstoff-dotierten Kohlenstoffnanoröhrchen nun handelsübliche Kohlenstoffnanoröhrchen (BayTubes®, Fa. BayTubes), verwendet wurden.

Eine Untersuchung gemäß dem Beispiel 5 erfolgte in Ermangelung von Stickstoffbestandteilen in den handelsüblichen Kohlenstoffhanoröhrchen nicht.

Die quantitative Elementanalyse (ICP-OES) auf Silber ergab eine Beladung von 20,6 gew.%.

Der erhaltene Katalysator wurde nachfolgend sowohl teilweise der Untersuchung gemäß dem Beispiel 6 als auch teilweise dem Beispiel 8 zugeführt.

### Beispiel 4: Herstellen eines weiteren nicht im erfindungsgemäßen Verfahren verwendbaren Katalysators

Es wurden Stickstoff-dotierte Kohlenstoffnanoröhrchen analog zu Beispiel 1 hergestellt. Im Gegensatz zu dem Beispiel 1 erfolgte keine nachfolgende Beladung derselben mit Silber-Nanopartikeln. Der somit erhaltene Katalysator wurde dem Beispiel 8 zugeführt.

### Beispiel 5: Röntgen-Photoelektronenspektroskopie (ESCA) Untersuchung der Katalysatoren gemäß Beispiel 1 und Beispiel 2

Mittels Röntgen-Photoelektronenspektroskopischer (ESCA; Gerät: ThermoFisher, ESCALab 220iXL; Methode: nach Angaben des Herstellers) Untersuchung wurde für die Stickstoff-dotierten Kohlenstoffnanoröhrchen, wie sie im Zuge des Beispiels 1 und des Beispiels 2 erhalten wurden, der Massenanteil an Stickstoff an den Stickstoff-dotierten Kohlenstoffnanoröhrchen, sowie innerhalb des ermittelten Massenanteils an Stickstoff der Stickstoff-dotierten Kohlenstoffnanoröhrchen der molare Anteil verschiedener Stickstoff-Spezies ermittelt. Die ermittelten Werte sind in der Tabelle 1 zusammengefasst dargestellt.

| | **Messwerte gemäß Beispiel 5** | | | | | | | |
|---|---|---|---|---|---|---|---|---|
| **Probe** | **N-Anteil [Gew.-%]** | **Pyridin N [mol.-%]** | **Amin N [mol.-%]** | **Pyrrol N [mol.-%]** | **Quaternär N [mol.-%]** | **Quaternär N [mol.-%]** | **Pyridin (oxidiert) N⁺-O [mol.-%]** | **NOₓ [mol.-%]** |
| Bsp.1 | 6,1 | 51,4 | 0 | 21,8 | 11,3 | 8,4 | 4,4 | 2,7 |
| Bsp.2 | 9,9 | 42,6 | 0 | 13,5 | 27,2 | 6,7 | 6,6 | 3,4 |

### Beispiel 6: Transmissionselektronenmikroskopische (TEM) Untersuchung der Katalysatoren gemäß Beispiel 1-3

Die gemäß den Beispielen 1 bis 3 erhaltenen Katalysatoren wurden nachfolgend unter einem Transmissionselektronenmikroskop (TEM; Philips TECNAI 20, mit 200 kV Beschleunigungsspannung) optisch auf ihre Beladung mit Silber hin untersucht.

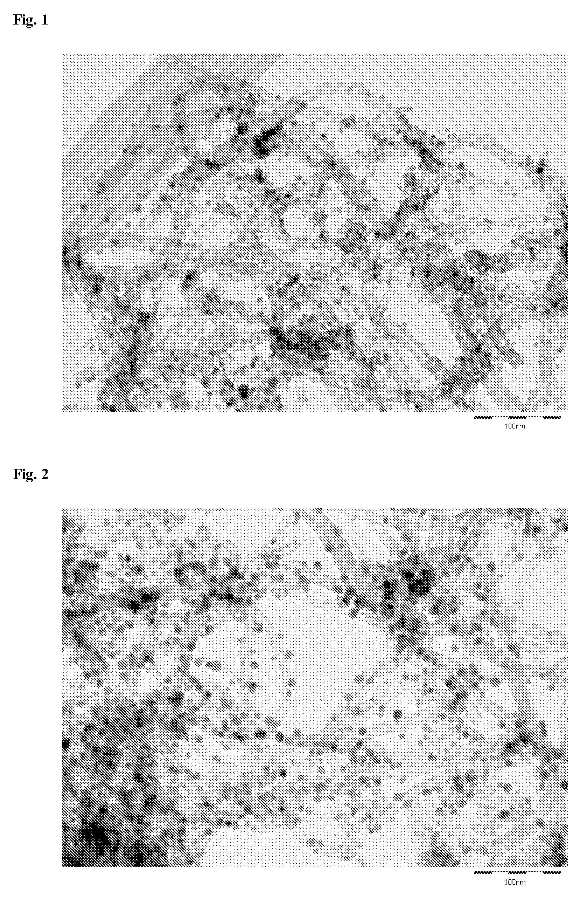

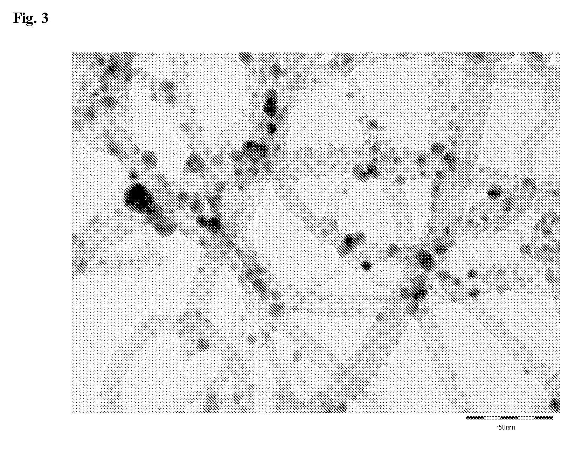

In den Fig. 1 und 2 sind die Katalysatoren gem. Beispiel 1 bzw. Beispiel 2 dargestellt. Fig. 3 zeigt ein TEM-Bild für einen Katalysator gemäß Beispiel 3. Alle drei Figuren bestätigen die mittels Elementanalyse ermittelte hohe Silber-Beladung von ca. 20 gew.%.

Durch den Einsatz von Additiven zur Stabilisierung der Silber-Nanopartikel während der Synthese wurde eine Agglomeration des Silbers generell verhindert und die durchschnittliche Silberpartikelgröße ist nach der Aufbringung auf die Stickstoff-dotieren und nicht-dotierten Kohlenstoffnanoröhrchen für alle drei Beispiele kleiner als 10 nm.

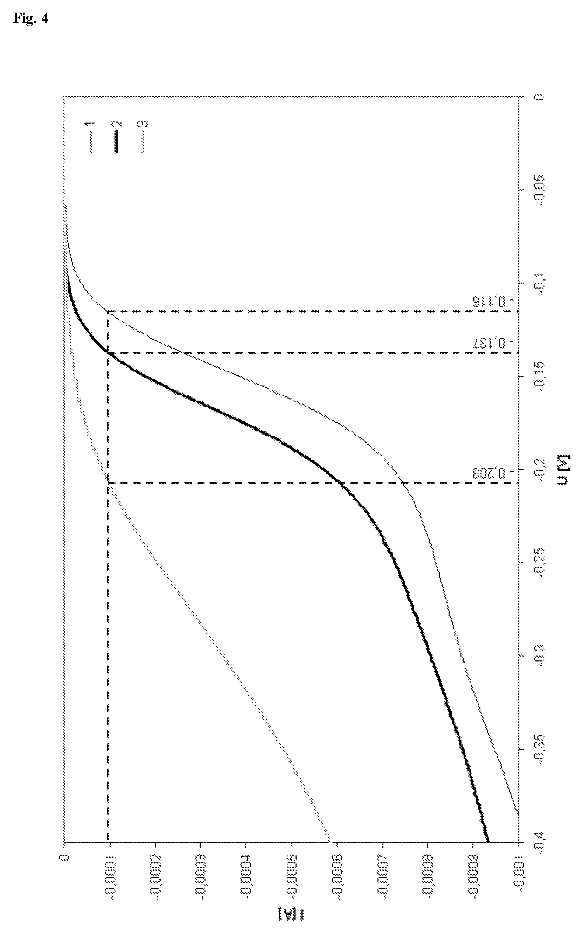

Somit können die gemäß Beispiel 7 und 8 ermittelten und in Fig. 4 gezeigten Unterschiede in der Aktivität für die elektrochemische Reduktion von Sauerstoff auf synergistische Effekte zwischen dem Kohlenstoffträgermaterial und den Silber-Nanopartikeln zurückgeführt werden. Die Silberbeladung bzw. Silberpartikelgröße als Ursache für die unterschiedliche Aktivität können dagegen hiermit ausgeschlossen werden.

### Beispiel 7: Erfindungsgemäßes Verfahren mit Katalysatoren aus Beispiel 1 und 2

80 mg der Katalysatoren gemäß Beispiel 1 bzw. Beispiel 2 wurden zunächst in 50 ml Aceton dispergiert und hiervon wurden 20 µl auf eine polierte Elektrodenoberfläche einer rotierenden Ringscheibenelektrode (Fa. Jaissle Elektronik GmbH) getropft.

Nach dem Verdampfen des Acetons wurden hierauf ca. 10 µl einer gesättigten Polyvinylalkohol Lösung zur Fixierung des Feststoffs aufgetropft.

Die rotierende Ringscheibenelektrode, nun umfassend die Katalysatoren gemäß Beispiel 1 bzw. Beispiel 2 wurde sodann als Arbeitselektrode in einer Laborzelle enthaltend 3 Elektroden (Arbeitselektrode, Gegenelektrode und Referenzelektrode) eingesetzt.

Der verwendete Aufbau ist dem Fachmann allgemein als Dreielektrodenanordnung bekannt. Als Elektrolyt umgebend die Arbeitselektrode wurde eine 1 molare NaOH-Lösung in Wasser eingesetzt, die zuvor mittels Durchleiten eines Gasstroms reinen Sauerstoffs mit Sauerstoff gesättigt wurde.

Als Referenzelektrode kam eine handelsübliche Ag/AgCl-Elektrode (Fa.: Mettler-Toledo) zum Einsatz.

Der Elektrolyt wurde auf 25°C temperiert. Die Reduktion des im Elektrolyt molekular gelösten Sauerstoffs wurde ebenfalls bei dieser Temperatur, welche kontrolliert wurde, ausgeführt.

Nachfolgend wurde nun in Bereichen von +0,14 V bis -0,96 V eine Potentialdifferenz zwischen der Arbeitselektrode und der Referenzelektrode eingestellt und der Verlauf des Reduktionstroms vermessen. Der vorgenannte Bereich von +0,14 V bis -0,96 V wurde mit einer Geschwindigkeit von 5 mV/s vermessen.

Die Rotationsgeschwindigkeit der Ringscheibenelektrode betrug 3600 UPM.

Zur Ermittlung der Vorteilhaftigkeit eines erfindungsgemäß ausgeführten Verfahrens zur Reduktion von Sauerstoff in alkalischen Medien, wurde aus den gemäß vorstehender Messung aufgenommenen Messdiagrammen jeweils die Potentialdifferenz zwischen Arbeitselektrode und Referenzelektrode bei einem Stromfluss von 10⁻⁴ A abgelesen. Ein Messdiagramm für die Messungen bezüglich des erfindungsgemäßen Verfahrens unter Verwendung der Katalysatoren aus den Beispielen 1, 2 und 3 ist in der Fig. 4 dargestellt.

Man erkennt, dass die Potentialdifferenz zwischen Referenzelektrode und Arbeitselektrode mit Katalysator gemäß Beispiel 1 etwa - 0,116 V bzw. mit Katalysator gemäß Beispiel 2 etwa - 0,137 V und im Fall des nicht erfindungsgemäßen Verfahrens unter Verwendung des Katalysators gemäß Beispiel 3 etwa - 0,208 V beträgt, wenn man die jeweilige Potentialdifferenz bei einem Stromfluss von 10⁻⁴ A abliest.

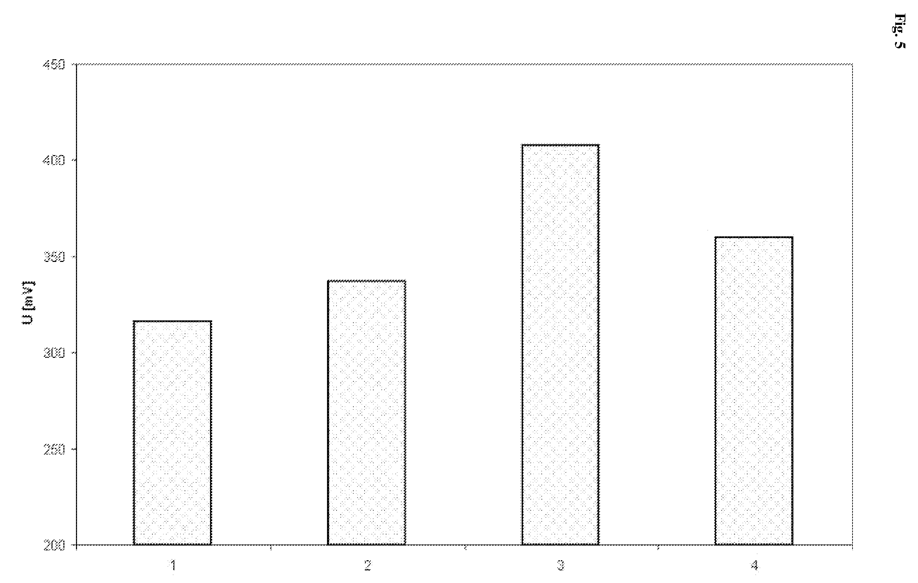

Alle so erhaltenen Ergebnisse der Versuche gemäß der Beispiele 7 und 8 sind noch einmal zusammengefasst in der Fig. 5 als in den jeweiligen Verfahren zu überwindende Überspannung gegen eine Ag/AgCl-Referenzelektrode in 1 N NaOH unter Standardbedingungen (23°C, 1013 hPa) dargestellt.

Man erkennt in der Fig. 5, dass in dem erfindungsgemäßen Verfahren eine Potentialdifferenz von (-) 0,116 V bzw. (-) 0,137 V vorliegt. Das bedeutet, dass im erfindungsgemäßen Verfahren, nur eine Überspannung von 0,316 V, bzw. 0,337 V (unter Annahme eines Redox-Potentials des Sauerstoffs von 0,2 V gegenüber einer Ag/AgCl-Referenzelektrode) vorliegt, so dass nur diese überwunden werden muss, um einen Stromfluss und damit eine Sauerstoffreduktion zu erzielen. Im Gegensatz hierzu ist in den nicht erfindungsgemäßen Verfahren eine Überspannung von 0,408 V, bzw. 0,36 V zu überwinden. Damit ist in den erfindungsgemäßen Verfahren nur ein verringerter Energiebedarf je Mol reduzierten Sauerstoffs notwendig.

### Beispiel 8: Nicht erfindungsgemäßes Verfahren mit Katalysatoren aus Beispielen 3 und 4

Ein Versuch gleich zu jenem in Beispiel 7 wurde durchgeführt, mit dem einzigen Unterschied, dass nun die Katalysatoren gemäß den Beispielen 3 und 4 eingesetzt wurden. Das Ergebnis der nicht erfindungsgemäßen Verfahren ist, wie im Rahmen des Beispiels 7 bereits beschrieben, auch für den Katalysator gemäß Beispiel 3 in Fig. 4 dargestellt. Das Ergebnis aus dem nicht erfindungsgemäßen Verfahren unter Verwendung des Katalysators gemäß dem Beispiel 4 ist in der Fig. 4 aus Gründen der Übersichtlichkeit nicht mehr dargestellt. Die zusammengefassten Versuchsdaten der Beispiele 7 und 8 sind in der Fig. 5 dargestellt. Man erkennt, wie bereits im Zuge der Diskussion des Beispiels 7 dargelegt, dass die nicht erfindungsgemäßen Verfahren einen höheren Energieverbrauch zur Reduktion von Sauerstoff zur Folge haben.

## Patentansprüche

1. Verfahren zur elektrochemischen Reduktion von Sauerstoff in alkalischen Medien eines pH-Wertes von mehr als 10, wobei es in Gegenwart eines Katalysators umfassend Stickstoff-dotierte Kohlenstoffnanoröhrchen (NCNT) mit auf deren Oberfläche im Anteil von 2 bis 60 Gew.-% befindlichen Metall-Nanopartikeln einer mittleren Partikelgröße im Bereich von 1 bis 15 nm ausgeführt wird und die Metall-Nanopartikel aus Silber (Ag) bestehen, **dadurch gekennzeichnet, dass** der Stickstoff mindestens zu 40 mol-% pyridinischer Stickstoff ist.

2. Verfahren gemäß Anspruch 1, **dadurch gekennzeichnet, dass** die Stickstoff-dotierten Kohlenstoffnanoröhrchen (NCNT) einen Anteil an Stickstoff von mindestens 0,5 Gew.-% aufweisen.

3. Verfahren gemäß Anspruch 1 oder 2, **dadurch gekennzeichnet, dass** der Stickstoff in den Stickstoff-dotierten Kohlenstoffnanoröhrchen (NCNT) mindestens teilweise als pyridinischer Stickstoff vorhanden ist.

## Claims

1. Process for the electrochemical reduction of oxygen in alkaline media having a pH of more than 10, which process is carried out in the presence of a catalyst comprising nitrogen-doped carbon nanotubes **(NCNTs)** comprising metal nanoparticles having an average particle size in the range from 1 to 15 nm present in a proportion of from 2 to 60% by weight on their surface and the metal nanoparticles consisting of silver (Ag), **characterized in that** at least 40 mol% of the nitrogen is pyridinic nitrogen.

2. Process according to Claim 1, **characterized in that** the nitrogen-doped carbon nanotubes **(NCNTs)** have a proportion of nitrogen of at least 0.5% by weight.

3. Process according to Claim 1 or 2, **characterized in that** the nitrogen in the nitrogen-doped carbon nanotubes **(NCNTs)** is at least partly present as pyridinic nitrogen.

## Revendications

1. Procédé de réduction électrochimique d'oxygène dans des milieux basiques ayant une valeur de pH supérieure à 10, le procédé étant réalisé en présence d'un catalyseur comprenant des nanotubes d'oxygène dopés à l'azote (NCNT) avec des nanoparticules métalliques se trouvant sur leur surface dans une proportion de 2 à 60 % en poids et ayant une taille de particule moyenne de l'ordre de 1 à 15 nm et les nanoparticules métalliques se composant d'argent (Ag), **caractérisé en ce que** l'azote est de l'azote pyridinique au moins à 40 % en mole.

2. Procédé selon la revendication 1, **caractérisé en ce que** les nanotubes d'oxygène dopés à l'azote (NCNT) présentent une proportion d'azote d'au moins 0,5 % en poids.

3. Procédé selon la revendication 1 ou 2, **caractérisé en ce que** l'azote dans les nanotubes d'oxygène dopés à l'azote (NCNT) est présent au moins en partie en tant qu'azote pyridinique.
